# EUROPÄISCHE PATENTANMELDUNG

(11) **EP 1 085 054 A2**
(43) Veröffentlichungstag der Anmeldung: **21.03.2001**
(21) Anmeldenummer: 00117405.1
(22) Anmeldetag: 11.08.2000
(51) Int. Cl.: C08L 91/06, C08L 91/08

(54) **Wachsmischung für wässrige Anwendungen**

(30) Priorität: 09.09.1999 DE 19942962
(71) Anmelder: Clariant GmbH, 65929 Frankfurt am Main (DE)
(72) Erfinder: Heinrichs, Franz-Leo, Dr., 86456 Gablingen (DE)

(57) **Zusammenfassung**

Die vorliegende Anmeldung bezieht sich auf Wachsmischungen, enthaltend Partialester von Polyolen und Montanwachssäure, Kohlenwasserstoffwachse, langkettige Carbonsäuren und langkettige Alkohole sowie auf deren Verwendung.

Damit lassen sich ohne wasserlöslichen Emulgator und permanenten Seifen wäßrigen Pasten herstellen, die in der Anwendung zu wasserfesten, nicht klebrigen, elastischen Filmen ohne Graubruch auf Lederoberflächen aufgetragen werden können. Die Trocknungszeiten sind kürzer als bei den bekannten Rezepturen, der getrocknete Auftrag kann mit geringem Aufwand zu hochglänzenden Filmen poliert werden.

## Beschreibung

Die vorliegende Anmeldung bezieht sich auf Wachsmischungen, enthaltend Partialester von Polyolen und Montanwachssäure und deren Folgeprodukte, langkettige Carbonsäuren, langkettige Alkohole sowie auf deren Verwendung.

Mischungen aus polaren Wachsen, Kohlenwasserstoffwachsen, Seifen und Paraffinen werden als pastenbildende Wachse in benzinischen Lösemitteln eingesetzt zur Herstellung von Schuhpflegemitteln. Der Festkörpergehalt dieser Mittel liegt bei ca. 25-30 Gew.-%, somit gehen 70 bis 75 Gew.-% der Rezeptur als flüchtige Lösemittelkomponente bei der Anwendung in die Umwelt. Zur Reduzierung dieser Emissionen besteht ein Bedarf an wäßrigen Formulierungen. Mit Rücksicht auf die Verbrauchergewohnheit sollen diese Formulierungen in der Anwendung keine Nachteile bringen und wie bisher als Paste in Dosen einsetzbar sein.

Rezepturen auf Wasserbasis enthalten hohe Anteile an Emulgatoren, z.B. ethoxilierte Alkohole, kurzkettige Alkohole oder Seifen, damit die Wachskomponenten im Wasser emulgiert werden können. Dies führt bei der Anwendung zu weichen Filmen oder gegen Wasser unbeständige Filme. Andere Rezepte kombinieren die Wachse mit Polymerdispersionen, um die Härte und Wasserbeständigkeit des Films zu verbessern, hier wird jedoch ein permanenter Filmaufbau auf der gepflegten Oberfläche festgestellt, der mit der Zeit bricht und der Oberfläche einen grauen Farbton gibt.

Somit bestand die Aufgabe, Wachsmischungen bereitzustellen, die die vorgenannten Nachteile nicht aufweisen.

Überraschenderweise wurde nun eine Wachsmischung gefunden, die ohne wasserlöslichen Emulgator und permanente Seifen zu wäßrigen Pasten verarbeitet werden kann, und die in der Anwendung zu wasserfesten, nicht klebrigen, elastischen Filmen ohne Graubruch auf Lederoberflächen aufgetragen werden kann. Die Trocknungszeiten sind kürzer als bei den bekannten Rezepturen, der getrocknete Auftrag kann mit geringem Aufwand zu hochglänzenden Filmen poliert werden.

Gegenstand der vorliegenden Erfindung ist somit eine Wachsmischung, enthaltend 10-80 Gew.-% einer Esterkomponente A, 10-80 Gew.-% einer Säurekomponente B sowie 10-80 Gew.-% einer Alkoholkomponente C.

Die erfindungsgemäße Wachsmischung enthält als Esterkomponente A synthetische Partialester von mehrwertigen Alkoholen und langkettigen Carbonsäuren und/oder deren Folgeprodukte wie Polyester und Urethane daraus, und/oder Naturwachse mit einer entsprechend hohen OHZ (Hydroxylzahl ) wie z. B. Carnaubawachs, als Säurekomponente B langkettige Wachssäuren wie Montanwachssäure oder C_{32/36} Guerbetsäure, als Alkoholkomponente C langkettige Alkohole mit einer Kettenlänge > C₁₈ wie Uniline Alkohole der Petrolite.

Säurekomponenten zur Herstellung der Esterkomponente A können sein: Montanwachssäure, Oxidate von langkettigen Olefinen oder Paraffinen und/oder Guerbetsäure C₃₂₋₃₆ in Kombination mit langkettigen Fettsäuren.

Alkoholkomponenten zur Herstellung der Esterkomponente A können sein: Trimethylolpropan, Pentaerythrit, Dipentaerythrit, Glycerin, Diglycerin, Sorbitol und Sorbitan, N-Alkylglucamine, Dialkanolamine.

Im einzelnen besteht die Esterkomponente A aus Partialestern von Polyolen mit Carbonsäuren und Carbonsäuremischungen der Kettenlänge C₁₆₋₃₆; Partialestern von Polyolen mit Carbonsäuren und Carbonsäuremischungen der Kettenlänge C₁₆₋₃₆, modifiziert mit mehrwertigen Carbonsäuren der Kettenlänge C₄₋₃₆; Partialestern von Polyolen mit Carbonsäuren und Carbonsäuremischungen der Kettenlänge C₁₆₋₃₆, modifiziert mit aromatischen oder aliphatischen Diisocyanaten; Partialestern von Polyolen mit Carbonsäuren und Carbonsäuremischungen der Kettenlänge C₁₆₋₃₆, modifiziert mit aromatischen oder aliphatischen niedermolekularen Carbonsäuren oder aus beliebigen Mischungen der vorgenannten Substanzen; sowie gegebenenfalls zusätzlich aus Naturwachsen mit einer OHZ > 20.

Bevorzugt sind Wachsmischungen, worin bei den Partialestern der Esterkomponente A die Anzahl der OH-Gruppen in der Alkoholkomponente >= 2 ist, wobei Ethandiol 1,2 und Butandiol 1,3 ausgenommen sind. Dabei können mehrwertige primäre Alkohole, wie z.B. Trimethylolpropan, Pentaerythrit, deren Dimere oder Oligomere und/oder deren Ethoxylierungsprodukte eingesetzt werden.

Bei den Partialestern der Esterkomponente A ist der Veresterungsgrad < 90 %, bevorzugt liegt er zwischen 50 und 75 %.

Bei den Partialestern der Esterkomponente A werden zur Modifizierung mit mehrwertigen Carbonsäuren meist dreiwertige und zweiwertige Carbonsäuren eingesetzt, insbesondere Citronensäure, Weinsäure, Apfelsäure, Itaconsäure, Maleinsäure, Adipinsäure, Sebacinsäure, Dodecandisäure, Dimerfettsäure, Phthalsäure, Terephthalsäure. Zur Modifizierung mit Isocyanaten werden meist monofunktionelle und difunktionelle aromatische und/oder aliphatische Isocyanate eingesetzt.

Insbesonders werden bei den Partialestern der Esterkomponente A zur Modifizierung mit kurzkettigen Carbonsäuren meist gesättigte, ungesättigte, hydroxyfunktionelle Fettsäuren, aromatische Carbonsäuren wie Hydroxybenzoesäure, Hydroxymethylbenzoesäure, Phenylessigsäure eingesetzt.

Die Säurekomponente B besteht meist aus Montanwachssäure, oder aus Oxidaten langkettiger Olefine oder Paraffine, oder aus Dimerisationsprodukten langkettiger Fettverbindungen wie Dimerfettsäure oder Guerbetsäure, oder aus Mischungen dieser vorgenannten Substanzen, oder aus Mischungen aus einer oder mehreren der vorgenannten Substanzen mit einer oder mehreren Fettsäuren.

Die Alkoholkomponente C besteht meist aus langkettigen Wachsalkoholen mit Kettenlänge > C₃₀ oder aus Guerbetalkohol mit Kettenlänge > C₃₀ oder aus Wollwachsalkohol und anderen Stearolen, oder aus beliebigen Mischungen der vorgenannten Substanzen, oder aus Mischungen aus einer oder mehrerer der vorgenannten Substanzen mit einem oder mehreren Fettalkoholen.

Die erfindungsgemäße Wachsmischung kann in Kombination mit anderen wachsartigen Verbindungen, wie z.B. Kohlenwasserstoffwachsen und/oder Naturwachsen und/oder Polymerdisperionen und bekannten Formulierhilfsmitteln zu Herstellung von wäßrigen Pasten für die Lederpflege verwendet werden.

Aus dieser Wachsmischung wird unter Zusatz geringer Mengen eines Verträglichkeitsvermittlers und einer Base, bevorzugt eines Amins, eine W/O-Emulsion hergestellt. Zur Verbesserung der Haltbarkeit kann ein Konservierungsmittel, z.B. Mergal K 9, und ein Feuchtigkeitsregulator wie Sorbit oder Glycerin zugesetzt werden. Zur Optimierung der Pastenhärte und der Filmhärte kann mit bekannten Formulierungskomponenten abgemischt werden.

### Vergleichsbeispiele

### Rezepturen:

Die Angaben in den Tabellen sind als Gewichtsteile zu verstehen.

### Vergleichsbeispiel 1: Lösemittelpräparation

| | | |
|---|---|---|
| Wachs O | 9,00 | Wachs und Lösemittel werden aufge- |
| Wachs E | 3,00 | heizt, die klare Lösung wird auf Gieß- |
| Wachs LP | 1,80 | temperatur 55-60°C abgekühlt, die |
| Wachs PE 520 | 1,80 | Lösung wird in Dosen vergossen und |
| Mikrowachs | 1,80 | in einem Temperierschrank abgekühlt. |
| Tafelparaffin | 9,00 | Hohe Pastenhärte, guter Glanz, stabile |
| Ca-Stearat | 1,50 | Filme, ausgereifte Technik, aber mit |
| Testbenzin | 72,10 | hohem Verlust an Lösemittel |
| | 100,00 | |

### Vergleichsbeispiel 2: wäßrig mit Alkohol und Polymerdispersion

| | | |
|---|---|---|
| Wachsemulsion, 40%ig | 40,00 | |
| Kolophoniumharz | 6,00 | O/W-System. Die Komponenten werden |
| Isopropanol | 20,00 | warm gemischt, zur Homogenisierung |
| Na-Silikat | 0,30 | wird Isopropanol zugesetzt, beim Ab- |
| Mowilith | 5,00 | kühlen entsteht ein festes Gel. Filme |
| Licomer W 11 | 1,50 | mit Selbstglanzeffekt, aber durch Aufbau |
| Wasser | 15,00 | von Polymerfilm Veränderung der |
| | 87,80 | Originaloberfläche |

### Vergleichsbeispiel 3: wäßrig mit Emulgator

| | | |
|---|---|---|
| Wachs S | 10,00 | |
| Paraffin | 10,00 | O/W-System, Wachs zu Wasser, |
| Kolophoniumharz | 2,00 | Wasser zu Wachs-Verfahren, ergibt |
| Genapol T 110 | 2,00 | O/W-Emulsion, die geliert und in Tuben |
| KOH | 1,00 | oder als Pasten eingefüllt wird |
| Wasser | 75,00 | |
| | 100,00 | |

### Vergleichsbeispiel 4: wäßrig mit Fettkomponenten

| | | |
|---|---|---|
| TMP-Montanester | 10,00 | |
| Talgfettsäure | 6,00 | W/O-System, Fettphase vorlegen |
| Tafelparaffin | 10,00 | (100°C), wenig Wasser mit der Base |
| Fettalkohol | 6,00 | zusetzen (90°C), Rest des Wassers |
| KOH | 1,00 | zusetzen, kalt rühren und bei 70°C |
| Sorbit | 2,00 | vergießen, man erhält einen klebrigen |
| Wasser | 165,00 | Film mit langer Trockenzeit |
| | 200,00 | |

### Erfindungsgemäße Rezepturen

### Beispiel 1: allgemeine Rezeptur

| | |
|---|---|
| Wachsmischung | 22,00 |
| Tafelparaffin | 10,00 |
| Base | 1,00 |
| Feuchthaltemittel | 2,00 |
| Wasser | 165,00 |
| | 200,00 |

### Zusammensetzung der Wachsmischung:

| | |
|---|---|
| TMP-Komplexester | 45,4 Gew.-% |
| Montansäure | 27,3 Gew.-% |
| Wachsalkohol Unilline 425 | 27,3 Gew.-% |

### Übersicht über Zusammensetzung der Montanester

| Alkoholkomponente | Veresterungsgrad % | Zusätze |
|---|---|---|
| Trimethylolpropan | 60-90 | keine |
| | 60 | Dicarbonsäure |
| | 60 | Diisocyanat |
| Pentaerythrit | 65-75 | keine |
| | 75 | Dicarbonsäure |
| | | Phenylessigsäure |
| | | Diisocyanat |
| Diglycerin | 50-65 | keine |
| Sorbit | 15-45 | keine |
| N-Methylglucamin | 30 | keine |
| Diethanolamin | 66 | keine |
| | | Phenylessigsäure |

### Beispiel 2

| | |
|---|---|
| Wachsmischung | 22,00 |
| Tafelparaffin 52-54 | 10,00 |
| Diethylentriamin | 1,00 |
| N-Methylglucamin | 2,00 |
| Wasser | 165,00 |
| | 200,00 |

### Beispiel 3

| | |
|---|---|
| Wachsmischung | 22,00 |
| Tafelparaffin 52-54 | 10,00 |
| Diethylentriamin | 1,00 |
| Sorbit | 2,00 |
| Wasser | 165,00 |
| | 200,00 |

### Beispiel 4

| | |
|---|---|
| Wachsmischung | 22,00 |
| Tafelparaffin 60-62 | 10,00 |
| Diethylentriamin | 1,00 |
| N-Methylglucamin | 2,00 |
| Wasser | 165,00 |
| | 200,00 |

### Beispiel 5

| | |
|---|---|
| Wachsmischung | 22,00 |
| Tafelparaffin 52-54 | 10,00 |
| Diethylentriamin | 1,00 |
| Diglycerin | 2,00 |
| Wasser | 165,00 |
| | 200,00 |

### Beispiel 6

| | |
|---|---|
| Wachsmischung | 22,00 |
| Tafelparaffin 52-54 | 10,00 |
| Diethylentriamin | 1,00 |
| N-Methylglucamin | 2,00 |
| Wasser | 165,00 |
| | 200,00 |

### Beispiel 7

| | |
|---|---|
| Wachsmischung | 22,00 |
| Tafelparaffin 52-54 | 10,00 |
| Diethylentriamin | 1,00 |
| N-Methylglucamin | 2,00 |
| Wasser | 165,00 |
| | 200,00 |

Die Härte der Pasten kann durch die geeigneten Kompositionen von weichen Produkten, wie Guerbetsäure, Guerbetalkohol, Tafelparaffin 52-54 und den harten Produkten wie Montanester, Unilinalkohol eingestellt werden. Die Feinabstimmung kann auch durch die weichmachende Wirkung der Feuchthaltemittel, wie z.B. Sorbit, N-Methylglucamin oder Diglycerin erreicht werden. Zur Vergrößerung des Temperaturbereichs in der Verarbeitung können noch geringe Anteile W/O-Emulgatoren oder Dispergierhilfsmittel wie Fettalkohol EO/PO Ether, Dioctylsulfobernsteinsäurenatriumsalz, Lanolin, Bienenwachs oder Kolophoniumderivate zugesetzt werden.

## Patentansprüche

1. Wachsmischung, enthaltend 10-80 Gew.-% einer Esterkomponente A, 10-80 Gew.-% einer Säurekomponente B sowie 10-80 Gew.-% einer Alkoholkomponente C.

2. Wachsmischung gemäß Anspruch 1, dadurch gekennzeichnet, daß die Esterkomponente A aus Partialestern von Polyolen mit Carbonsäuren und Carbonsäuremischungen der Kettenlänge C₁₆-C₃₆;
Partialestern von Polyolen mit Carbonsäuren und Carbonsäuremischungen der Kettenlänge C₁₆-C₃₆, modifiziert mit mehrwertigen Carbonsäuren der Kettenlänge C₄-C₃₆;
Partialestern von Polyolen mit Carbonsäuren und Carbonsäuremischungen der Kettenlänge C₁₆-C₃₆, modifiziert mit aromatischen oder aliphatischen Diisocyanaten;
Partialestern von Polyolen mit Carbonsäuren und Carbonsäuremischungen der Kettenlänge C₁₆-C₃₆, modifiziert mit aromatischen oder aliphatischen niedermolekularen Carbonsäuren; oder aus beliebigen Mischungen der vorgenannten Substanzen, sowie gegebenenfalls zusätzlich aus Naturwachsen mit einer OHZ > 20 besteht.

3. Wachsmischung gemäß Anspruch 1, dadurch gekennzeichnet, daß bei den Partialestern der Esterkomponente A die Anzahl der OH-Gruppen in der Alkoholkomponente > = 2 ist; daß Ethandiol 1,2 und Butandiol 1,3 ausgenommen sind; daß mehrwertige primäre Alkohole, deren Dimere oder Oligomere und/oder deren Ethoxylierungsprodukte eingesetzt werden können.

4. Wachsmischung gemäß Anspruch 1, dadurch gekennzeichnet, daß bei den Partialestern der Esterkomponente A der Veresterungsgrad < 90 % ist.

5. Wachsmischung gemäß Anspruch 1, dadurch gekennzeichnet, daß bei den Partialestern der Esterkomponente A der Veresterungsgrad zwischen 50 und 75 % liegt.

6. Wachsmischung gemäß Anspruch 1, dadurch gekennzeichnet, daß bei den Partialestern der Esterkomponente A zur Modifizierung mit mehrwertigen Carbonsäuren dreiwertige und zweiwertige Carbonsäuren eingesetzt werden, und daß zur Modifizierung mit Isocyanaten monofunktionelle und difunktionelle aromatische und/oder aliphatische Isocyanate eingesetzt werden.

7. Wachsmischung gemäß Anspruch 6, dadurch gekennzeichnet, daß Citronensäure, Weinsäure, Apfelsäure, Itaconsäure, Maleinsäure, Adipinsäure, Sebacinsäure, Dodecandisäure, Dimerfettsäure, Phthalsäure, Terephthalsäure eingesetzt werden.

8. Wachsmischung gemäß Anspruch 1, dadurch gekennzeichnet, daß bei den Partialestern der Esterkomponente A zur Modifizierung mit kurzkettigen Carbonsäuren gesättigte, ungesättigte, hydroxyfunktionelle Fettsäuren, oder aromatische Carbonsäuren eingesetzt werden.

9. Wachsmischung gemäß Anspruch 1, dadurch gekennzeichnet, daß die Säurekomponente B aus Montanwachssäure oder aus Oxidaten langkettiger Olefine oder Paraffine oder aus Dimerisationsprodukten langkettiger Fettverbindungen oder aus beliebigen Mischungen der vorgenannten Substanzen, oder aus beliebigen Mischungen aus einer oder mehreren der vorgenannten Substanzen mit einer oder mehreren Fettsäuren besteht.

10. Wachsmischung gemäß Anspruch 1, dadurch gekennzeichnet, daß die Alkoholkomponente C aus langkettigen Wachsalkoholen mit Kettenlänge > C₃₀ oder aus Guerbetalkohol mit Kettenlänge > C₃₀ oder aus Wollwachsalkohol und anderen Stearolen oder aus beliebigen Mischungen der vorgenannten Substanzen, oder aus beliebigen Mischungen aus einer oder mehreren der vorgenannten Substanzen mit einem oder mehreren Fettalkoholen besteht.

11. Wachsmischung gemäß den Ansprüchen 1 bis 10 in Kombination mit anderen wachsartigen Verbindungen, Kohlenwasserstoffwachsen und/oder Naturwachsen und/oder Polymerdisperionen und bekannten Formulierhilfsmitteln zu Herstellung von wäßrigen Pasten für die Lederpflege.
